# EUROPÄISCHE PATENTSCHRIFT

(11) **EP 2 947 194 B1**
(45) Veröffentlichungstag und Bekanntmachung des Hinweises auf die Patenterteilung: **05.09.2018**
(21) Anmeldenummer: 14169546.0
(22) Anmeldetag: 22.05.2014
(51) Int. Cl.: D06F 39/08, A47L 15/42, F16L 33/04, F16L 55/07, F16K 31/06

(54) **KOPPLUNGSANORDNUNG FÜR EIN HAUSHALTSGERÄT, VORRICHTUNG FÜR EIN HAUSHALTSGERÄT SOWIE HAUSHALTSGERÄT**
COUPLING ASSEMBLY FOR A DOMESTIC APPLIANCE, DEVICE FOR A DOMESTIC APPLIANCE AND DOMESTIC APPLIANCE
SYSTÈME D'ACCOUPLEMENT POUR UN APPAREIL MÉNAGER, DISPOSITIF POUR UN APPAREIL MÉNAGER ET APPAREIL MÉNAGER

(43) Veröffentlichungstag der Anmeldung: 25.11.2015
(73) Patentinhaber: SCHLEMMER GMBH, 85586 Poing (DE)
(72) Erfinder: Meißner, Roland, 97422 Schweinfurt (DE)
(74) Vertreter: Horn Kleimann Waitzhofer Patentanwälte PartG mbB

(56) Entgegenhaltungen:
- EP-A2- 1 327 812
- EP-A2- 1 955 640
- WO-A2-2012/140595

## Beschreibung

Die vorliegende Erfindung betrifft eine Kopplungsanordnung für ein Haushaltsgerät, eine Vorrichtung für ein Haushaltsgerät sowie ein Haushaltsgerät.

Beispielsweise ist aus der EP 2 314 752 B1 eine Kopplungsanordnung für ein Haushaltsgerät bekannt. Diese umfasst einen inneren Wellschlauch, an welchem eine Tülle angespritzt wird. Die Tülle wird bei der Montage auf einen Anschlussstutzen aufgeschoben und auf diesem mittels einer Schelle gesichert.

Ferner beschreibt die EP 1 327 812 A2 eine Wellschlauchanordnung mit einem Schnellverbinder.

Eine Aufgabe der vorliegenden Erfindung besteht darin, einen verbesserten Ansatz bereitzustellen.

Demgemäß wird eine Kopplungsanordnung für ein Haushaltsgerät bereitgestellt. Die Kopplungsanordnung umfasst einen Anschlussstutzen, welcher innenseitig einen Kanal zum Transportieren eines Fluids und außenseitig eine Schulter aufweist. Ferner umfasst die Kopplungsanordnung eine auf den Anschlussstutzen in eine Montagerichtung aufgeschobene, elastische Tülle, wobei die Tülle innenseitig eine die Schulter des Anschlussstutzen hintergreifende, erste Schulter, sowie außenseitig eine zweite Schulter aufweist (in der Montagerichtung hinter der ersten Schulter). Weiterhin umfasst die Kopplungsanordnung einen Wellschlauch, welcher an einem Endabschnitt innenseitig eine Schulter aufweist, welche die zweite Schulter der Tülle hintergreift.

Vorteilhaft ist bei dieser Lösung weder das Anspritzen einer Tülle noch das Befestigen mit einer Schelle erforderlich, um eine abdichtende Verbindung zwischen einem Wellschlauch und einem Anschlussstutzen bereitzustellen. Denn die Tülle ist mit dem Anschlussstutzen durch elastisches Hintergreifen, und der Endabschnitt des Wellschlauchs mit der Tülle ebenfalls durch elastisches Hintergreifen verbunden. Ferner kann aufgrund der elastischen Tülle vorteilhaft zumindest der Endabschnitt des Wellschlauchs oder auch der gesamte Wellschlauch aus einem vergleichsweise steifen Material gebildet sein. Entsprechend kann auch der Anschlussstutzen aus einem steifen Material gebildet sein.

Beispielsweise kann so ein Abzugsdruck von größer 5 bar, bevorzugt größer 8 bar, weiter bevorzugt größer 10 bar und noch weiter bevorzugt größer 13 bar erreicht werden. Der Abzugsdruck bezeichnet einen Fluiddruck in dem Wellschlauch, bei Überschreiten dessen sich der Endabschnitt des Wellschlauchs von dem Anschlussstutzen entgegen der Montagerichtung löst. Entsprechend kann eine zuverlässige Verbindung, die auch hohen Drücken standhalten kann, bereitgestellt werden.

Insbesondere kann die zweite Schulter der Tülle in der Montagerichtung hinter der ersten Schulter der Tülle liegen.

Bei dem "Fluid" kann es sich um eine Flüssigkeit, insbesondere Wasser, oder ein Gas, insbesondere Wasserdampf, sowie Gemische dieser handeln. Bei dem Wasser kann es sich insbesondere um Frischwasser oder Abwasser handeln.

Der "Frischwasseranschluss" umfasst auch eine Zisterne zur Bereitstellung von gesammeltem Regenwasser.

Der Anschlussstutzen, die Tülle und/oder der Wellschlauch erstrecken sich entlang einer Längsachse, und zwar zumindest abschnittweise ineinander, und sind bevorzugt koaxial angeordnet. Insbesondere sind der Anschlussstutzen, die Tülle und/oder der Wellschlauch (zumindest der Endabschnitt desselben) rotationssymmetrisch bezüglich deren Längsachse ausgebildet. Soweit vorliegend von "radial", "axial" oder "in Umfangsrichtung" gesprochen wird, so bezieht sich dies stets auf die Längsachse.

Die Montagerichtung weist entlang der Längsachse und meint diejenige Richtung, entlang derer die Tülle auf den Anschlussstutzen sowie der Endabschnitt des Wellschlauchs auf die Tülle aufgeschoben wird, um die Kopplungsanordnung herzustellen bzw. die genannten Komponenten in elastisch hintergreifenden Eingriff miteinander zu bringen.

Die Wellen des Wellschlauchs können beispielsweise sinusförmig, rechteckig oder eine sonstige Form, beispielsweise auch eine Wendelform aufweisen.

Die Verbindung der drei Bauelemente (Anschlussstutzen, Tülle und Wellschlauch) wird bevorzugt durch Formschluss aufrechterhalten. Zusätzlich kann die Verbindung der drei Bauelemente durch Reibschluss aufrechterhalten werden.

Der Wellschlauch ist bevorzugt als Druckschlauch ausgebildet und damit geeignet, üblichen Drücken, insbesondere Wasserdrücken, im Haushaltsbereich standzuhalten.

Gemäß einer Ausführungsform weist die Tülle gegenüberliegend der ersten Schulter eine dritte Schulter auf, gegen welche der Endabschnitt des Wellschlauchs axial anliegt.

Aufgrund dieser Anlage zwischen dem Endabschnitt und der dritten Schulter wird sichergestellt, dass die Schulter des Endabschnitts in dichtender Anlage gegen die erste Schulter der Tülle verbleibt. Mit anderen Worten wird somit der Endabschnitt des Wellschlauchs in und entgegen der Montagerichtung an der Tülle fixiert.

Gemäß einer weiteren Ausführungsform ist ein axialer Steg des Endabschnitts des Wellschlauchs zwischen der ersten und zweiten Schulter der Tülle axial geklemmt.

Aufgrund dieser - elastischen - Klemmung wird eine besonders hohe Dichtigkeit erzielt.

Gemäß einer weiteren Ausführungsform erweitert sich ein Durchmesser des Endabschnitts des Wellschlauchs in der Montagerichtung.

Insbesondere weist also der Endabschnitt an einem Übergang zu einem gewellten Abschnitt des Wellschlauchs einen ersten Durchmesser und im Bereich des Anschlussstutzens und/oder im Bereich der Tülle einen zweiten Durchmesser auf, wobei der zweite Durchmesser größer als der erste Durchmesser ist. Dadurch kann der gewellte Abschnitt mit einem vergleichsweise kleinen Durchmesser gebildet werden, was im Hinblick auf Anwendungen vorteilhaft sein kann, bei denen ein geringerer Durchmesser der Schlaucheinrichtung gewünscht ist, was die Handhabbarkeit verbessern kann.

Gemäß einer weiteren Ausführungsform weist der Endabschnitt eine Tulpenform auf.

Diese lässt sich einfach herstellen, beispielsweise in einem Extrusions- oder Spritzgussverfahren.

Gemäß einer weiteren Ausführungsform schließt sich an die Tulpenform ein nach innen gerichteter, radialer Steg des Endabschnitts an. Zusätzlich oder alternativ schließt sich an den radialen Steg der axiale Steg des Endabschnitts in der Montagerichtung an.

Der radiale und der axiale Steg des Endabschnitts des Wellschlauchs definieren dessen Schulter.

Gemäß einer weiteren Ausführungsform weist die Tulpenform eine Versteifungssicke auf.

Dadurch kann der Abzugsdruck noch weiter erhöht werden.

Gemäß einer weiteren Ausführungsform ist der Endabschnitt des Wellschlauchs und/oder die Tulpenform einstückig mit einem gewellten Abschnitt des Wellschlauchs gebildet.

Die Tulpenform und/oder der Endabschnitt werden also nicht erst in einem der Herstellung des Wellschlauchs nachgelagerten Schritt hergestellt. Vielmehr werden der Endabschnitt und/oder die Tulpenform gleichzeitig mit dem gewellten Abschnitt des Wellschlauchs einstückig hergestellt, insbesondere urgeformt, beispielsweise durch Extrudieren oder Spritzen.

Gemäß einer weiteren Ausführungsform ist die Tülle aus einem Elastomer, insbesondere aus einem Gummi, gebildet. Der Gummi kann einen Kunststoff oder einen Naturkautschuk aufweisen.

Grundsätzlich kommen als Kunststoff alle Polyolefine, insbesondere Polyethylen, Polypropylen oder Polyvinylchlorid (PVC), in Betracht.

Gemäß einer weiteren Ausführungsform weist die Tülle in der Montagerichtung vor der ersten Schulter eine Fase zum Komprimieren der Tülle beim Aufschieben des Endabschnitts des Wellschlauchs auf diese auf.

Nachdem die Schulter des Endabschnitts die erste Schulter der Tülle passiert hat, erweitert sich die Tülle wieder, so dass es zu dem elastischen Hintergreifen kommt. Der Anschlussstutzen kann auch als Anschlussstück bezeichnet werden.

Gemäß einer weiteren Ausführungsform weist das Anschlussstück in der Montagerichtung vor seiner Schulter eine Fase zum Aufweiten der Tülle beim Aufschieben derselben auf das Anschlussstück auf.

Passiert die Tülle die Fase des Anschlussstücks, so entspannt die Tülle, wodurch es zu dem elastischen Hintergreifen kommt. Allerdings wären auch andere Möglichkeiten zum Aufweiten der Tülle denkbar, beispielsweise mittels eines entsprechenden Werkzeugs.

Gemäß einer weiteren Ausführungsform ist der Wellschlauch aus Polyethylen, Polypropylen oder Polyvinylchlorid (PVC) hergestellt.

Grundsätzlich kann der Wellschlauch auch aus einem anderen Polyolefin hergestellt sein.

Weiterhin wird eine Vorrichtung für ein Haushaltsgerät bereitgestellt. Die Vorrichtung umfasst einen Außenschlauch und eine Kopplungsanordnung, wie vorstehend beschrieben. Der Wellschlauch erstreckt sich zumindest teilweise innerhalb des Außenschlauchs.

Der Wellschlauch bildet also einen Innenschlauch im Außenschlauch. Bevorzugt ist der Innenschlauch ein Druckschlauch und/oder der Außenschlauch ein Schutzschlauch.

Gemäß einer weiteren Ausführungsform weist die Vorrichtung ferner ein Gehäuse, welches den Anschlussstutzen umfasst, und ein Ventil zum Absperren oder Freigeben des Kanals auf, welches in dem Gehäuse angeordnet ist.

Weiterhin kann ein elektrisches Kabel vorgesehen sein, welches in dem Ringspalt zwischen dem Außenschlauch und dem Innenschlauch verläuft. Das elektrische Kabel kann dazu eingerichtet sein, das Ventil mit einem Signal und/oder mit Energie zu versorgen.

Weiterhin kann die Vorrichtung einen Sensor zum Detektieren von Leckageflüssigkeit und eine Steuereinrichtung aufweisen, die dazu eingerichtet ist, in Abhängigkeit von einem Signal des Sensors das Ventil zum Absperren oder Freigeben des Kanals anzusteuern. Der Sensor kann insbesondere in einem Auffangbereich des Haushaltsgeräts zum Auffangen von Leckageflüssigkeit, welche aus dem Innenschlauch bei einem Versagen desselben austritt, angeordnet sein. Der Auffangbereich steht in diesem Fall mit dem Ringraum zwischen dem Außen- und Innenschlauch in flüssigkeitsleitender Verbindung, so dass die Leckage in diesen abfließen kann.

Das Ventil ist insbesondere ein elektromagnetisch betätigtes Ventil.

Weiterhin wird ein Haushaltsgerät mit einer Kopplungsanordnung, wie vorstehend beschrieben, oder einer Vorrichtung, wie vorstehend beschrieben, bereitgestellt.

Bei dem Haushaltsgerät kann es sich um ein wasserführendes Haushaltsgerät, insbesondere um eine Geschirrspülmaschine oder eine Waschmaschine, handeln.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt in einer perspektivischen Ansicht eine Vorrichtung für ein Haushaltsgerät gemäß einer Ausführungsform; und
- Fig. 2: zeigt einen Längsschnitt aus Fig. 1.

In den Figuren bezeichnen gleiche Bezugszeichen gleiche oder funktionsgleiche Komponenten, sofern nichts Gegenteiliges angegeben ist.

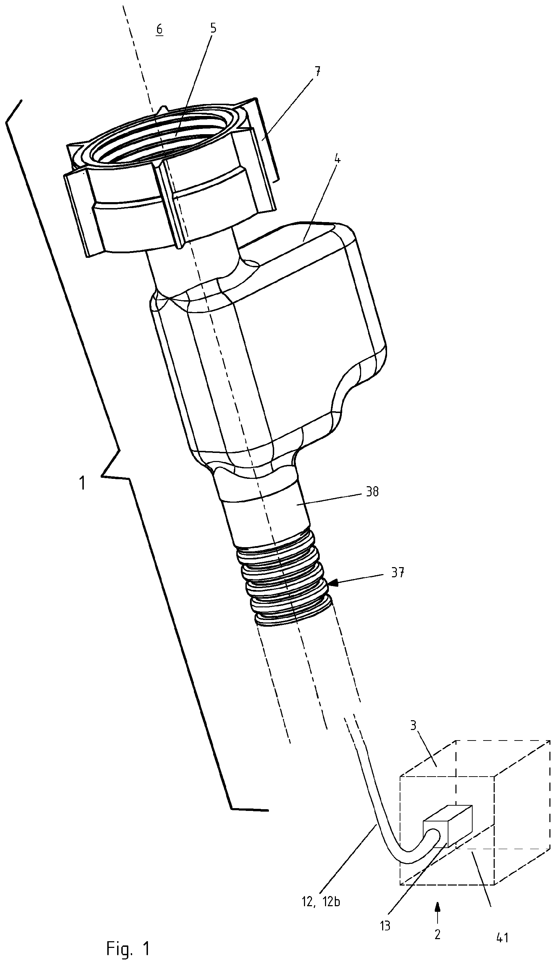

In Fig. 1 ist perspektivisch eine Vorrichtung 1 gezeigt. Die Vorrichtung 1 ist Bestandteil eines lediglich gestrichelt angedeuteten Haushaltsgeräts 2, kann sich jedoch außerhalb eines Korpus 3 desselben erstrecken.

Die Vorrichtung 1 umfasst ein Gehäuse 4, in welchem ein Kanal 5 ausgebildet ist. Der Kanal 5 ist an einer Anschlussseite 6 beispielsweise mit einem Frischwasseranschluss (nicht dargestellt), der hausseitig vorgesehen ist, verbunden. Hierzu kann eine Mutter 7 vorgesehen sein, mittels welcher das Gehäuse 4 an ein entsprechendes Gewinde (nicht dargestellt) des Frischwasseranschlusses anschraubbar ist.

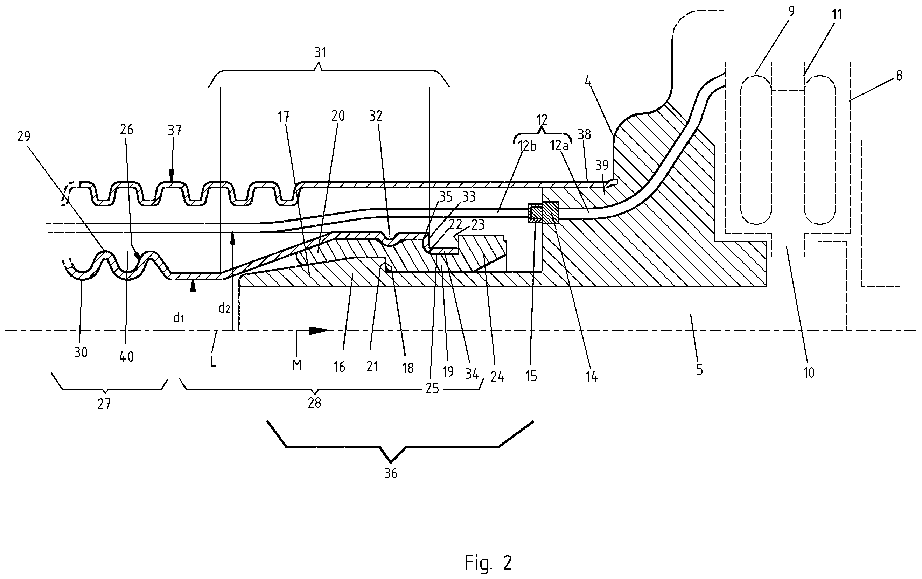

Wie in dem Schnitt aus Fig. 2 zu sehen, ist in dem Gehäuse 4 ein Ventil 8 aufgenommen. Das Ventil 8 weist beispielsweise eine Spule 9 auf, welche in Abhängigkeit von einem Steuersignal ein Ventilelement 10 zum Absperren oder Freigeben des Kanals 5 betätigt. Das entsprechende Steuersignal kann beispielsweise von einer Steuereinrichtung 11 erzeugt werden, welche gemäß dem Ausführungsbeispiel in das Ventil 8 integriert ist. Genauso gut kann die Steuereinrichtung 11 jedoch auch an einer anderen Stelle in dem Gehäuse 4 oder sonst wo in dem Haushaltsgerät 2, beispielsweise auf einer Steuerplatine (nicht gezeigt) derselben, die in dem Korpus 3 angeordnet, vorgesehen sein. Die Steuereinrichtung 11 ist wiederum mittels eines elektrischen Kabels 12 mit einem in Fig. 1 gezeigten Sensor 13 verbunden.

Das elektrische Kabel 12 kann sich aus zwei Abschnitten 12a, 12b zusammensetzen, wobei ein erster Abschnitt 12a des elektrischen Kabels 12a in dem Gehäuse 4 verläuft und einen Stecker 14 an der Peripherie des Gehäuses 4 mit der Steuereinrichtung 11 elektrisch leitend verbindet. Ein zweiter Abschnitt 12b des elektrischen Kabels 12 ist an seinem einen Ende mittels einer Buchse 15 mit dem Stecker 14 lösbar verbunden und ist an seinem anderen Ende mit dem Sensor 13 gekoppelt. Die Funktionsweise wird im Detail noch später näher beschrieben.

Das Gehäuse 4 weist gegenüberliegend der Anschlussseite 6 einen Anschlussstutzen 16 auf. Der Anschlussstutzen 16 bildet in seinem Inneren einen Teil des Kanals 5 aus. Der Anschlussstutzen 16 erstreckt sich entlang einer Längsachse L und kann bezüglich dieser rotationssymmetrisch ausgebildet sein. Soweit vorliegend von "radial", "axial" oder "in Umfangsrichtung" gesprochen wird, so bezieht sich dies stets auf die Längsachse L.

In einer mit M bezeichneten Montagerichtung entlang der Längsachse L weist der Anschlussstutzen 16 eine sich im Durchmesser vergrößernde Fase 17 auf. An die Fase 17 schließt sich in der Montagerichtung M eine Schulter 18 an.

Auf den Anschlussstutzen 16 ist eine Tülle 19 in der Montagerichtung M aufgeschoben. Die Tülle 19 erstreckt sich ebenfalls entlang der Längsachse L und ist vorzugsweise rotationssymmetrisch bezüglich dieser ausgebildet. Die Tülle 19 ist aus einem elastischen Material, beispielsweise Gummi, hergestellt. Auch die Tülle 19 weist eine Fase 20 auf, welche sich in der Montagerichtung M hinsichtlich ihres Durchmessers vergrößert. An ihrer Innenseite weist die Tülle 19 eine erste Schulter 21 auf, mittels welcher sie die Schulter 18 des Anschlussstutzens 16 elastisch hintergreift. Außenseitig und der ersten Schulter 21 in der Montagerichtung M nachgeordnet weist die Tülle 19 ferner eine zweite Schulter 22 außenseitig auf. Der zweiten Schulter 22 gegenüberliegend umfasst die Tülle 19 eine dritte Schulter 23, die beispielsweise an einem radialen Flansch 24 der Tülle 19 ausgebildet sein kann. Die zweite Schulter 22, die dritte Schulter 23 sowie eine Ringfläche 25 der Tülle 19 definieren somit eine um die Längsachse L umlaufende Nut aus.

Ferner ist ein als Wellschlauch ausgeführter Innenschlauch 26 vorgesehen. Dieser umfasst einen gewellten Abschnitt 27 und einen sich daran anschließenden Endabschnitt 28. Der gewellte Abschnitt 27 umfasst als Wellen und Täler geformte Wandungsabschnitte 29 bzw. 30, wobei diese gemäß dem Ausführungsbeispiel eine Sinusform beschreiben. Genauso könnten diese jedoch auch ein eckiges Profil, beispielsweise ein rechteckiges Profil, oder eine Wendelgeometrie aufweisen.

Der Endabschnitt 28 ist aus demselben Material und in demselben Herstellungsschritt, insbesondere einem Extrusions- oder Spritzgussverfahren, wie der gewellte Abschnitt 27 des Wellschlauchs 26 hergestellt.

Der Endabschnitt 28 erstreckt sich ebenfalls entlang der Längsachse L und ist bevorzugt rotationssymmetrisch bezüglich dieser ausgebildet. Der Endabschnitt 28 umfasst eine Muffen- oder Tulpenform 31. Diese erweitert sich von einem Durchmesser d1 des gewellten Abschnitts 27 hin zu einem Durchmesser d2, welcher die Tülle 19 außenseitig umfasst. Die Tulpenform 31 kann mittels einer um die Längsachse L umlaufenden Sicke 32 verstärkt sein. An die Tulpenform 31 schließt sich wiederum ein radialer Steg 33, der nach innen gerichtet ist, an. An den radialen Steg 33 schließt sich wiederum ein axialer Steg 34 in der Montagerichtung M an.

Der radiale Steg 33 und der axiale Steg 34 definieren zusammen an ihrer Innenseite eine Schulter 35, welche die zweite Schulter 22 der Tülle 19 elastisch hintergreift. Beim Aufschieben des Endabschnitts 28 über die Tülle 19 schnappt die Schulter 35 elastisch hinter die Schulter 22 der Tülle, so dass sich hier ein entsprechender Formschluss ergibt. Der axiale Steg 34 ist dabei zwischen die Schultern 22, 23 der Tülle 19 elastisch eingespannt, so dass sich eine besonders gute Dichtwirkung ergibt. Beispielsweise kann so ein Abzugsdruck von größer 8 bar erreicht werden.

Der Endabschnitt 28, die Tülle 19 und der Anschlussstutzen 16 bilden eine Kopplungsanordnung 36 aus, welche das einfache Herstellen einer dichten Verbindung zwischen einem Wellschlauch 26 und einem Anschlussstutzen 16 ermöglicht. Vorteilhaft können der Innenschlauch 26 und der Anschlussstutzen 16 dabei aus einem vergleichsweise steifen Material, das vorteilhaft entsprechend dünnwandig vorgesehen werden kann, ausgebildet sein. Die für das elastische Hintergreifen erforderliche Elastizität wird dabei bevorzugt lediglich von der elastischen Tülle 19 bereitgestellt. Zumindest weist diese eine höhere Elastizität als der Endabschnitt 28 oder der Anschlussstutzen 16 auf.

Gemäß dem Ausführungsbeispiel verläuft der Innenschlauch 26 innerhalb eines Außenschlauches 37 der Vorrichtung 1. Der Außenschlauch 37 ist auch in Fig. 1 gezeigt. Dieser ist beispielsweise ebenfalls als Wellschlauch ausgebildet und kann zu diesem Zweck sinusförmige oder rechteckige oder sonst wie geformte Wellen aufweisen. Der Außenschlauch 37 kann ferner ebenfalls eine Tulpenform 38 umfassen, mittels derer er auf einen korrespondierenden Gehäuseabschnitt 39 des Gehäuses 4 aufgeschoben und dadurch befestigt ist. Die Kopplungsanordnung 36 ist innerhalb der Tulpenform 38 angeordnet.

Der Innenschlauch 26 und/oder der Außenschlauch 37 können aus Polyethylen, Polypropylen, Polyvinylchlorid (PVC) oder einem sonstigen Polyolefin oder Kunststoff gebildet sein. Diese können miteinander einen Ringraum 40 definieren, in welchem der zweite Abschnitt 12b des elektrischen Kabels 12 verläuft. Potentiell aus dem Innenschlauch 26 bei einem Versagen desselben austretendes Leckagewasser wird in dem Ringraum 40 aufgefangen und hin zu der in Fig. 1 gezeigten Auffangwanne 41 im Korpus 3 des Haushaltsgeräts 2 geleitet. In der Auffangwanne 41 ist der Sensor 13 angeordnet und detektiert dort das Vorhandensein von Leckageflüssigkeit. Der Sensor 13 liefert dann in Abhängigkeit von einem Vorhandensein von Leckageflüssigkeit oder in Abhängigkeit von einem Füllstand der Leckageflüssigkeit in dem Auffangboden 41 ein entsprechendes Sensorsignal an die Steuereinrichtung 11 (siehe Fig. 2) mittels des elektrischen Kabels 12.

Obwohl die Erfindung vorliegend anhand bevorzugter Ausführungsbeispiele beschrieben wurde, ist sie darauf keineswegs beschränkt, sondern vielfältig modifizierbar.

### BEZUGSZEICHENLISTE

- 1: Vorrichtung
- 2: Haushaltsgerät
- 3: Korpus
- 4: Gehäuse
- 5: Kanal
- 6: Anschlussseite
- 7: Mutter
- 8: Ventil
- 9: Spule
- 10: Ventilelement
- 11: Steuereinrichtung
- 12: elektrisches Kabel
- 12a, 12b: Abschnitte
- 13: Sensor
- 14: Stecker
- 15: Buchse
- 16: Anschlussstutzen
- 17: Fase
- 18: Schulter
- 19: Tülle
- 20: Fase
- 21: erste Schulter
- 22: zweite Schulter
- 23: dritte Schulter
- 24: Flansch
- 25: Ringfläche
- 26: Innenschlauch
- 27: gewellter Abschnitt
- 28: Endabschnitt
- 29: Wandungsabschnitt
- 30: Wandungsabschnitt
- 31: Tulpenform
- 32: Sicke
- 33: radialer Steg
- 34: axialer Steg
- 35: Schulter
- 36: Kopplungsanordnung
- 37: Außenschlauch
- 38: Tulpenform
- 39: Gehäuse
- 40: Ringraum
- 41: Auffangwanne

- d1, d2: Durchmesser
- L: Längsachse
- M: Montagerichtung

## Patentansprüche

1. Kopplungsanordnung (36) für ein Haushaltsgerät (2), mit:
einem Anschlussstutzen (16), welcher innenseitig einen Kanal (5) zum Transportieren eines Fluids und außenseitig eine Schulter (18) aufweist,
einer auf den Anschlussstutzen (16) in einer Montagerichtung (M) aufgeschobenen, elastischen Tülle (19), wobei die Tülle (19) innenseitig eine die Schulter (18) des Anschlussstutzens (16) hintergreifende, erste Schulter (21) sowie außenseitig eine zweite Schulter (22) aufweist, und
einem Wellschlauch (26), welcher an einem Endabschnitt (28) desselben innenseitig eine Schulter (35) aufweist, die die zweite Schulter (22) der Tülle (19) hintergreift.

2. Kopplungsanordnung (36) nach Anspruch 1, wobei die Tülle (19) gegenüberliegend der ersten Schulter (22) eine dritte Schulter (23) aufweist, gegen welche der Endabschnitt (28) des Wellschlauchs (26) axial anliegt.

3. Kopplungsanordnung (36) nach Anspruch 2, wobei ein axialer Steg (34) des Endabschnitts (28) des Wellschlauchs (26) zwischen der ersten und zweiten Schulter (22, 23) der Tülle (19) axial geklemmt ist.

4. Kopplungsanordnung (36) nach einem der Ansprüche 1 bis 3, wobei sich ein Durchmesser (d1, d2) des Endabschnitts (28) des Wellschlauchs (26) in der Montagerichtung (M) erweitert.

5. Kopplungsanordnung (36) nach Anspruch 4, wobei der Endabschnitt (28) des Wellschlauchs (26) eine Tulpenform (31) aufweist.

6. Kopplungsanordnung (36) nach Anspruch 5, wobei sich an die Tulpenform (31) ein nach innen gerichteter, radialer Steg (33) des Endabschnitts (28) anschließt und wobei sich an den radialen Steg (33) der axiale Steg (34) des Endabschnitts (28) in der Montagerichtung (M) anschließt.

7. Kopplungsanordnung (36) nach Anspruch 5 oder 6, wobei die Tulpenform (31) eine Versteifungssicke (32) aufweist.

8. Kopplungsanordnung (36) nach einem der Ansprüche 5 bis 7, wobei der Endabschnitt (28) des Wellschlauchs (26) und/oder die Tulpenform (31) einstückig mit einem gewellten Abschnitt (27) des Wellschlauchs (26) gebildet ist.

9. Kopplungsanordnung (36) nach einem der Ansprüche 1 bis 8, wobei die Tülle (19) aus einem Elastomer, insbesondere einem Gummi, gebildet ist.

10. Kopplungsanordnung (36) nach einem der Ansprüche 1 bis 9, wobei die Tülle (19) in der Montagerichtung (M) vor der ersten Schulter (21) eine Fase (20) zum Komprimieren der Tülle (19) beim Aufschieben des Endabschnitts (28) des Wellschlauchs (26) auf diese aufweist.

11. Kopplungsanordnung (36) nach einem der Ansprüche 1 bis 10, wobei der Anschlussstutzen (16) in der Montagerichtung (M) vor seiner Schulter (18) eine Fase (17) zum Aufweiten der Tülle (19) beim Aufschieben derselben in der Montagerichtung (M) auf den Anschlussstutzen (16) aufweist.

12. Kopplungsanordnung (36) nach einem der Ansprüche 1 bis 11, wobei der Wellschlauch (26) aus Polyethylen, Polypropylen oder Polyvinylchlorid hergestellt ist.

13. Vorrichtung (1) für ein Haushaltsgerät (2), mit:
einem Außenschlauch (37) und
einer Kopplungsanordnung (36) nach einem der Ansprüche 1 bis 12, wobei sich zumindest der Wellschlauch (26) zumindest teilweise innerhalb des Außenschlauchs (37) erstreckt.

14. Vorrichtung (1) nach Anspruch 13, ferner aufweisend ein Gehäuse (4), welches den Anschlussstutzen (16) umfasst, und ein Ventil (8) zum Absperren oder Freigeben des Kanals (5), welches in dem Gehäuse (4) angeordnet ist.

15. Haushaltsgerät (2) mit einer Kopplungsanordnung (36) nach einem der Ansprüche 1 bis 12 oder einer Vorrichtung (1) nach Anspruch 13 oder 14.

## Claims

1. Coupling arrangement (36) for a domestic appliance (2), comprising:
a connecting piece (16) comprising an interior duct (5) for transporting a fluid and an exterior shoulder (18);
an elastic sleeve (19) push-fitted in a fitting direction (M) onto the connecting piece (16), wherein the sleeve (19) has an interior first shoulder (21) engaging behind the shoulder (18) of the connecting piece (16) and an exterior second shoulder (22); and
a corrugated hose (26), an end portion (28) of which has an interior shoulder (35) engaging behind the second shoulder (22) of the sleeve (19).

2. Coupling arrangement (36) according to claim 1, wherein the sleeve (19), opposite the first shoulder (22), comprises a third shoulder (23) against which the end portion (28) of the corrugated hose (26) is axially abutting.

3. Coupling arrangement (36) according to claim 2, wherein an axial strip (34) of the end portion (28) of the corrugated hose (26) is axially jammed between the first and second shoulders (22, 23) of the sleeve (19).

4. Coupling arrangement (36) according to any one of claims 1 to 3, wherein a diameter (d1, d2) of the end portion (28) of the corrugated hose (26) widens in the fitting direction (M).

5. Coupling arrangement (36) according to claim 4, wherein the end portion (28) of the corrugated hose (26) has a tulip shape (31).

6. Coupling arrangement (36) according to claim 5, wherein an inwardly directed radial strip (33) of the end portion (28) adjoins the tulip shape (31), and wherein the axial strip (34) of the end portion (28) adjoins the radial strip (33) in the fitting direction (M).

7. Coupling arrangement (36) according to claim 5 or 6, wherein the tulip shape (31) has a reinforcement bead (32).

8. Coupling arrangement (36) according to any one of claims 5 to 7, wherein the end portion (28) of the corrugated hose (26) and/or the tulip shape (31) is integrally formed with a corrugated portion (27) of the corrugated hose (26).

9. Coupling arrangement (36) according to any one of claims 1 to 8, wherein the sleeve (19) is formed from an elastomer, in particular from a rubber.

10. Coupling arrangement (36) according to any one of claims 1 to 9, wherein the sleeve (19) has, in the fitting direction (M) before the first shoulder (21), a chamfer (20) for compressing the sleeve (19) when the end portion (28) of the corrugated hose (26) is push-fitted onto the sleeve (19).

11. Coupling arrangement (36) according to any one of claims 1 to 10, wherein the connecting piece (16) has, in the fitting direction (M) before the shoulder (18), a chamfer (17) for widening the sleeve (19) when the sleeve (19) is push-fitted onto the connecting piece (16) in the fitting direction (M).

12. Coupling arrangement (36) according to any one of claims 1 to 11, wherein the corrugated hose (26) is made from polyethylene, polypropylene or polyvinylchloride.

13. Device (1) for a domestic appliance (2), comprising:
an outer hose (37), and
a coupling arrangement (36) according to any one of claims 1 to 12, wherein at least the corrugated hose (26) at least partially extends inside the outer hose (37).

14. Device (1) according to claim 13, further comprising a housing (4) which includes the connecting piece (16), and a valve (8) for closing or opening the duct (5), the valve (8) being disposed in the housing (4).

15. Domestic appliance (2) comprising a coupling arrangement (36) according to any of claims 1 to 12 or a device (1) according to claim 13 or 14.

## Revendications

1. Système de couplage (36) pour un appareil ménager (2), comprenant :
une pièce de raccordement (16), qui comprend un canal (5) pour transporter un fluide sur son intérieur et un épaulement (18) sur son extérieur,
un embout élastique (19) poussé sur la pièce de raccordement (16) dans une direction de montage (M), dans lequel l'embout élastique (19) comprend sur son intérieur un premier épaulement (21) qui s'imbrique derrière l'épaulement (18) ainsi qu'un deuxième épaulement (22) sur son extérieur, et
un tuyau ondulé (26), qui comprend sur une partie d'extrémité (28) de celui-ci, sur son intérieur, un épaulement (35), qui s'imbrique derrière le deuxième épaulement (22) de l'embout (19).

2. Système de couplage (36) selon la revendication 1, dans lequel l'embout (19) comprend, en face du premier épaulement (22), un troisième épaulement (23), contre lequel la partie d'extrémité (28) du tuyau ondulé (26) est disposée axialement.

3. Système de couplage (36) selon la revendication 2, dans lequel une traverse axiale (34) de la partie d'extrémité (28) du tuyau ondulé (26) est axialement coincée entre le premier et le deuxième épaulement (22, 23) de l'embout (19).

4. Système de couplage (36) selon l'une des revendications 1 à 3, dans lequel un diamètre (d1, d2) de la partie d'extrémité (28) du tuyau ondulé (26) s'élargit dans la direction de montage (M).

5. Système de couplage (36) selon la revendication 4, dans lequel la partie d'extrémité (28) du tuyau ondulé (26) a une forme de tulipe (31).

6. Système de couplage (36) selon la revendication 5, dans lequel une traverse radiale (33) orientée vers l'intérieur de la partie d'extrémité (28) se raccorde à la forme de tulipe (31) et dans lequel la traverse axiale (34) de la partie d'extrémité (28) se raccorde à la traverse radiale (33) dans la direction de montage (M).

7. Système de couplage (36) selon la revendication 5 ou 6, dans lequel la forme de tulipe (31) comprend une moulure de renforcement (32).

8. Système de couplage (36) selon l'une des revendications 5 à 7, dans lequel la partie d'extrémité (28) du tuyau ondulé (26) et/ou la forme de tulipe (31) est intégralement formée avec une partie ondulée (27) du tuyau ondulé (26).

9. Système de couplage (36) selon l'une des revendications 1 à 8, dans lequel l'embout (19) est formé d'un élastomère, en particulier d'un caoutchouc.

10. Système de couplage (36) selon l'une des revendications 1 à 9, dans lequel l'embout (19) comprend un chanfrein (20) devant le premier épaulement (21) dans la direction de montage (M) pour comprimer l'embout (19) lorsque la partie d'extrémité (28) du tuyau ondulé (26) est poussée sur celui-ci.

11. Système de couplage (36) selon l'une des revendications 1 à 10, dans lequel la pièce de raccordement (16) comprend un chanfrein (17) devant son épaulement (18) dans la direction de montage (M) pour élargir l'embout (19) lorsque celui-ci est poussé sur la pièce de raccordement (16) dans la direction de montage (M).

12. Système de couplage (36) selon l'une des revendications 1 à 11, dans lequel le tuyau ondulé (26) est fabriqué en polyéthylène, en polypropylène ou en chlorure de polyvinyle.

13. Dispositif (1) pour un appareil ménager (2), comprenant :
un tuyau extérieur (37); et
un système de couplage (36) selon l'une des revendications 1 à 12, dans lequel au moins le tuyau ondulé (26) s'étend au moins partiellement à l'intérieur du tuyau extérieur (37).

14. Dispositif (1) selon la revendication 13, comprenant en outre un boîtier (4) incluant la pièce de raccordement (16), et une soupape (8) pour fermer ou ouvrir le canal (5), qui est agencée dans le boîtier (4).

15. Appareil ménager (2) avec un système de couplage (36) selon l'une des revendications 1 à 12 ou un dispositif (1) selon la revendication 13 ou 14.
